# EUROPEAN PATENT APPLICATION

(11) **EP 1 726 666 A1**
(43) Date of publication of application: **29.11.2006**
(21) Application number: 05719514.1
(22) Date of filing: 25.02.2005
(51) Int. Cl.: C22B 1/248

(54) **BRIQUETTE AS STEELMAKING RAW MATERIAL AND PROCESS FOR PRODUCING THE SAME**

(30) Priority: 25.02.2004 JP 2004050197; 10.03.2004 JP 2004067428
(71) Applicant: JTEKT Corporation, Chuo-ku, Osaka-shi Osaka 542-8502 (JP)
(72) Inventor: MATSUDA, Mitsuma, 7611702 (JP)
(74) Representative: Sajda, Wolf E.
(86) International application number: PCT/JP2005/003113
(87) International publication number: WO 2005/080614

(57) **Abstract**

A briquette for use as steelmaking material and a method of manufacturing the same, capable of effective reusing of the shot waste. After dropping a solidification assistant into shot waste consisting of powder metal containing iron powder and shot beads, the shot waste is compression molded. The compression molded shot waste is dried. Alternatively, the shot waste is admixed with cutting sludge containing ferrous-metal cutting residue particles and a cutting fluid containing oil and water, thereby forming cotton-like agglomerations. The cotton-like agglomerations are compression molded, thereby forming a brittle compact, which has the fibrous cutting sludge roughly sheared and which is removed of excessive water and oil. The brittle compact is impregnated with the solidification assistant, solidified and dried.

## Description

### Technical Field

The present invention relates to a briquette for use as a steelmaking material and a method of manufacturing the same. Particularly, the invention relates to a technique for effectively utilizing shot waste resulting from shot blasting a ferrous metal.

### Background Art

The shot waste resulting from shot blasting the ferrous metal generally contains a ferrous powder metal and spent shot beads (steel beads) in a total amount on the order of 75 to 95wt%. Therefore, the aforesaid shot waste can offer an effective resource as a steelmaking material. Unfortunately, however, the shot waste is apt to ignite or to be scattered. Furthermore, the shot waste contains such a great number of shot beads that the shot waste is hard to be solidified by compression molding and the like. This leads to a disadvantage in the handling operations thereof such as transportation and storage. Accordingly, the reuse of the shot waste involves technical and cost disadvantages. In reality, therefore, the shot waste is committed to landfill disposal as industrial waste.

Such a landfill disposal of the shot waste is not favorable from the standpoint of the effective utilization of resources. In addition, the landfill disposal not only entails an environmental deterioration but also requires a high disposal cost.
In view of the foregoing, the invention has been accomplished and has an object to provide a briquette for use as a steelmaking material, which allows for an effective reuse of the shot waste, and to provide a method of manufacturing the same.

### Disclosure of Invention

According to the invention for achieving the above object, a briquette for use as steelmaking material comprises a dry briquette which contains a ferrous metal and which is formed by solidifying shot waste with a solidification assistant, the shot waste containing a ferrous powder metal and a great number of shot beads.
The briquette for use as steelmaking material, having the above composition, is formed by solidifying the shot waste with the solidification assistant. Therefore, the briquette is capable of exhibiting an adequate degree of mechanical strength so as to be easy to handle during transportation, storage and the like. Because of the dry solid mass nature, the briquette directly charged into a blast furnace involves no risk of causing bumping or being scatteringly carried upward to be discharged from the furnace. What is more, the briquette contains the great number of shot beads formed from pure iron having an iron content of 90wt% or more. This leads to a decreased use of a reducing agent in a steel making process. Thus, the briquette permits the shot waste to be reused as a high-quality steelmaking material, contributing to the environmental conservation as well as to the reduction of the disposal cost of the shot waste.

The above shot beads may preferably be bonded to one another via the ferrous powder metal impregnated with the aforesaid solidification assistant. Thus, the shot beads, which have been difficult to be bonded together by the prior-art technique, can be readily and rigidly bonded together.
The above briquette for use as steelmaking material may preferably contain the above solidification assistant in an amount of 0.5 to 5wt%. Thus, the compression molding can easily and reliably solidify the shot waste, while ensuring the quality of the shot waste as the steelmaking material.

The above briquette for use as a steelmaking material may further contain ferrous-metal cutting residue particles and oil. In this case, the oil prevents the oxidization of the pure iron present in the briquette, so that the cutting residue particles and the shot waste can be reused as the high-quality steelmaking material.

The briquette for use as steelmaking material containing the above oil may preferably contain the shot waste in an amount of 5 to 25wt%. Thus, the briquette can achieve adequate degrees of bulk density and mechanical strength. If the content of the shot waste is less than 5wt%, the briquette has such a small bulk density that the briquette, as charged into some type of blast furnace, may not fall down smoothly in the furnace. If the content of the shot waste exceeds 25wt%, the following problem is encountered. In a case where the shot waste is unevenly distributed, the briquette is susceptible to fracture at its portion where the shot waste is concentrated.

In the briquette for use as steelmaking material containing the oil, the shot waste may preferably comprise shot beads formed from steel. In this case, a content of oxidized iron is so small that the briquette can make an even more favorable steelmaking material. Specifically, the shot waste in general contains the steel beads and a powder material. The steel beads contain pure iron in an amount of 90wt% or more, whereas the powder material contains oxidized powder iron in an amount of 60 to 65wt%. That is, with the increase in the content of the powder material, the briquette contains the greater amount of oxidized iron. This dictates the need to increase the use of the reducing agent in the steelmaking process, leading to a disadvantage in terms of cost. However, if the shot beads removed of the powder material are used as the shot waste, the briquette is reduced in the content of the oxidized iron. Accordingly, the use of the reducing agent can be reduced.

The solidification assistant may preferably be at least one selected from the group consisting of sodium silicate, colloidal silica, aluminum phosphate and asphalt emulsion. Thus, the shot waste, the cutting residue particles and the like can be readily and rigidly solidified.

A method of manufacturing a briquette for use as steelmaking material according to a first aspect of the invention comprises the steps of: adding a solidification assistant to shot waste containing a ferrous powder metal and shot beads; compression molding the shot waste admixed with the solidification assistant; and drying the compression molded shot waste.
According to the manufacture method of briquette for use as steelmaking material according to the first aspect, the shot waste is compression molded whereby the solidification assistant admixed to the shot waste is allowed to permeate substantially the whole mass of the shot waste. Despite the great number of shot beads contained therein, the shot waste can be solidified to a desired strength by compression molding. Thus, the briquette for use as steelmaking material can be manufactured with ease and at low cost.

The briquette manufacture method of the first aspect may further comprise a step of impregnating the solidification assistant into the shot waste, the step being interposed between the step of compression molding the shot waste and the step of drying the compression molded shot waste. In this case, the briquette further increased in the mechanical strength can be obtained.

A method of manufacturing a briquette for use as steelmaking material according to a second aspect of the invention comprises the steps of: forming cotton-like agglomerations by admixing shot waste to cutting sludge containing ferrous-metal cutting residue particles and a cutting fluid containing oil and water; compression molding the cotton-like agglomerations thereby forming a brittle compact of a predetermined shape, which has the fibrous cutting residue particles sheared and which is removed of excessive water and oil; impregnating a solidification assistant into the brittle compact; and drying the brittle compact impregnated with the solidification assistant.

According to the manufacture method of briquette for use as steelmaking material according to the second aspect, the compression molding of the cotton-like agglomerations roughly shears the fibrous cutting residue particles, which have been difficult to be sheared by the prior-art technique, so that the cutting residue particles along with the shot waste can be solidified easily. Furthermore, the solidification assistant impregnated into the brittle compact permits the brittle compact merely compression molded to be solidified to a desired strength. Hence, the manufacture process negates the need for finely crushing the cotton-like agglomerations in order to solidify the agglomerations. Thus, the briquette for use as steelmaking material can be manufactured with ease and at low cost.

In the briquette manufacture method of the second aspect, it is preferred to admix the shot waste in an amount of 10 to 30wt%. If the content of the shot waste in the cotton-like agglomerations is less than 10wt%, a briquette having a great bulk density is difficult to obtain. If the content of the shot waste in the cotton-like agglomerations exceeds 30wt%, the agglomerations are difficult to solidify. Furthermore, in a case where the shot waste is unevenly distributed, the briquette may be susceptible to fracture at its portion where the shot waste is concentrated.

In the briquette manufacture method of the second aspect, shot beads formed from steel may preferably be used as the shot waste. In this case, the briquette is decreased in the content of oxidized iron, thus providing an even more favorable steelmaking material.

In the briquette manufacture methods of the first and second aspects, the solidification assistant may preferably be at least one selected from the group consisting of sodium silicate, colloidal silica, aluminum phosphate and asphalt emulsion. Thus, the shot waste can be more easily and rigidly solidified. According to the briquette manufacture method of the second aspect, in particular, the brittle compact containing the oil can be solidified easily and rigidly.

### Brief Description of Drawings

- FIG. 1: is a step chart illustrating a method of manufacturing a briquette for use as steelmaking material according to a first embodiment of the invention;
- FIG.2: is a step chart illustrating a method of manufacturing a briquette for use as steelmaking material according to a second embodiment of the invention;
- FIG.3: is a partially cut-away perspective view showing a briquette; and
- FIG.4: is a step chart illustrating a method of manufacturing a briquette for use as steelmaking material according to a third embodiment of the invention.

### Best Modes for Carrying Out the Invention

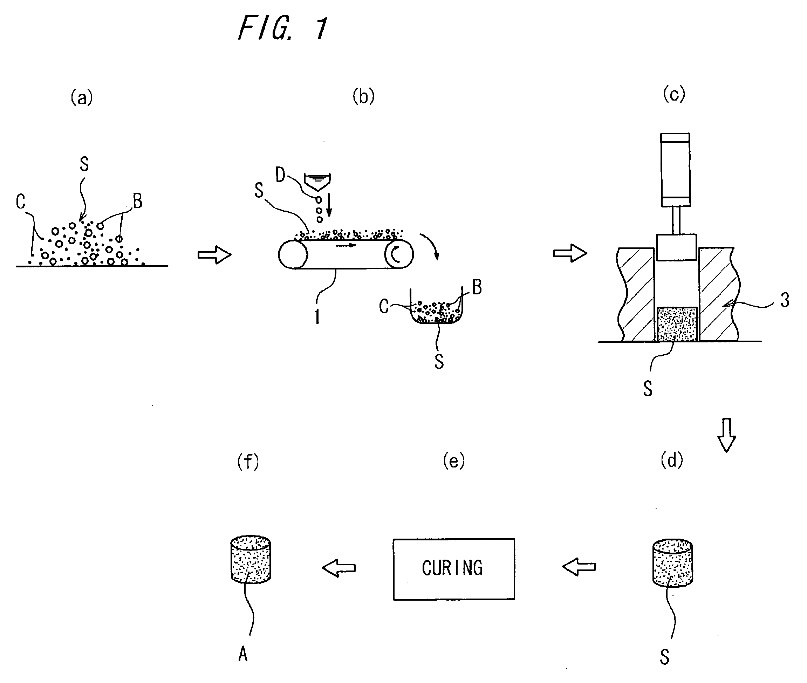

The preferred embodiments of the invention will hereinbelow be described in details with reference to the accompanying drawings.
FIG. is a step chart illustrating a method of manufacturing a briquette for use as steelmaking material according to a first embodiment of the invention. In the manufacture of a briquette A, shot waste S (FIG. 1(a)) resulting from shot blasting a ferrous metal is first transported by means of a belt conveyor 1, while a solidification assistant D in liquid form is added dropwise to the shot waste S (FIG.1(b)).
The shot waste S includes a great number of spent shot beads B thinned down to less than a predetermined particle size by the shot blasting process, a ferrous powder metal C and the like. The powder metal contains oxidized powder iron in an amount of 60 to 65wt%. A 100% sodium silicate solution is used as the solidification assistant D.

Next, the shot waste S admixed with the solidification assistant D is compression molded by means of a press using a mold 3 (FIG.1(c), FIG.1(d)). The compression molding allows the solidification assistant D added to the shot waste S to permeate substantially the whole mass of the shot waste S. Thus, the solidification assistant D is uniformly impregnated into the powder metal C and is also allowed to uniformly adhere to the surfaces of the shot beads B.

Subsequently, the shot waste S impregnated with the solidification assistant D is allowed to cure (dry) for two days or so, for example, (FIG.1(e)). Thus, the solidification assistant D is solidified to complete the briquette A for use as steelmaking material (FIG. (f)). For curing, the shot waste may also be quickly cooled by applying thereto air blow at normal temperatures or cooled air blow.
The above manufacture process provides the dry, porous briquette A. The briquette A may preferably contain the shot waste in an amount of 95 to 99.5wt%, and the solidification assistant D in an amount of 0.5 to 5.0wt%. This composition ensures the quality of the briquette as the steelmaking material and permits the shot waste S to be easily and rigidly solidified. If the content of the solidification assistant D is less than 0.5wt%, the resultant briquette has such a low mechanical strength as to be susceptible to fracture during transportation or other handling operations. If the content of the solidification assistant exceeds 5wt%, the content of the ferrous metal is accordingly decreased and hence, the briquette is lowered in the quality as the steelmaking material.

The briquette A manufactured by the above process is a porous mass formed by solidifying the shot waste S and hence, is readily and assuredly removed of water by curing. Therefore, when the briquette is directly charged into the blast furnace, there is no fear of causing bumping or of being scatteringly carried upward to be discharged from the furnace. Furthermore, since the briquette is formed by solidifying the shot waste S with the solidification assistant D, the briquette can exhibit an adequate degree of mechanical strength such as to facilitate the handling operations thereof such as transportation and storage.
Particularly, the compression molding allows the solidification assistant D to permeate substantially the whole mass of the shot waste S and hence, the great number of shot beads B in the shot waste S can be bonded together by way of the powder metal C containing the solidification assistant D. This results in the rigid solidification of the shot waste S. What is more, the use of the reducing agent in the steelmaking process can be decreased because the briquette contains the great number of shot beads B containing the pure iron in an amount of 90wt% or more. Accordingly, the shot waste S can be reused as a high-quality steelmaking material.

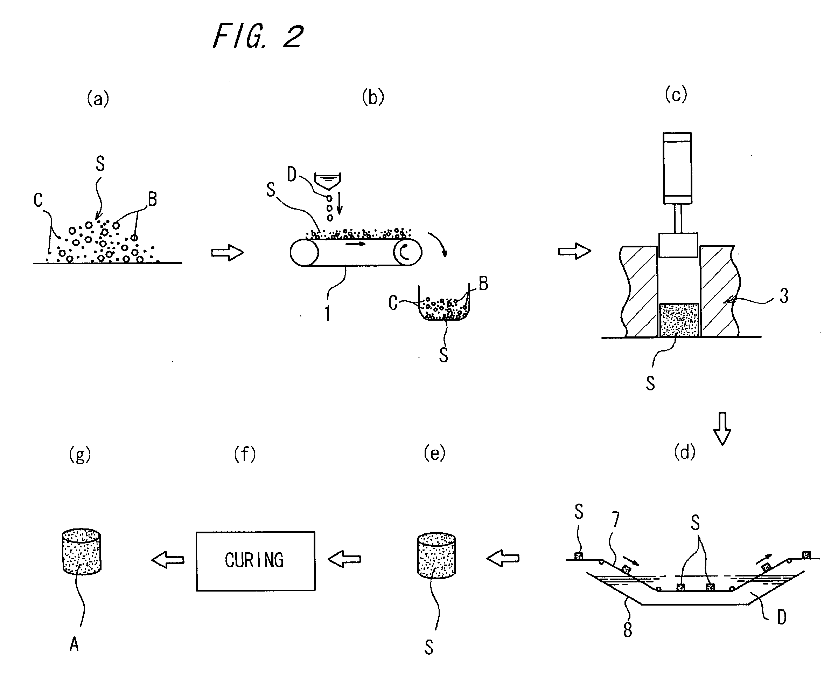

FIG.2 is a step chart illustrating a method of manufacturing a briquette for use as steelmaking material according to a second embodiment of the invention. This embodiment differs from the embodiment shown in FIG. 1 in that the manufacture process further includes a step of impregnating the solidification assistant D into the shot waste S, the step being interposed between the step of compression molding the shot waste S and the step of drying the compression molded shot waste S.
The impregnation of the solidification assistant D is performed as follows, for example. As carried on a belt conveyor 7, the compression molded shot waste S is dipped in the solidification assistant D filled in a tank 8 (FIG.2(d)). Sodium silicate diluted with water is used as the solidification assistant D filled in the tank 8. Thus is ensured a good permeability of the solidification assistant D into the compression molded shot waste S. According to this embodiment, the mechanical strength of the briquette A is further increased.

The first embodiment may also use sodium silicate diluted with water as the solidification assistant D. In this case, the solidification assistant D can easily and effectively permeate the shot waste S during the compression molding.
In either embodiment, at least one selected from the group consisting of sodium silicate, colloidal silica and aluminum phosphate may be used as the solidification assistant D. These compounds are capable of easily and rigidly solidifying the shot waste S.

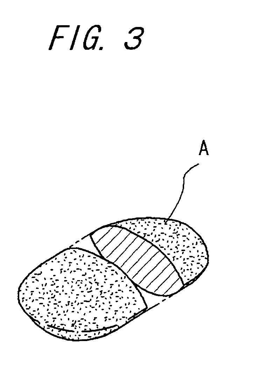

Besides the circular cylinder shape shown in FIG.1, the briquette A may also take a substantially pillow-like shape, such as of eggs, almond and rugby ball. The pillow-like shape has a rounded circumferential edge and is gradually increased in thickness from the circumferential edge toward its center (FIG.3). Molding the shot waste into such a shape provides the briquette A which is hard to collapse against a compressive load and is less susceptible to partial fracture at its corner and the like.

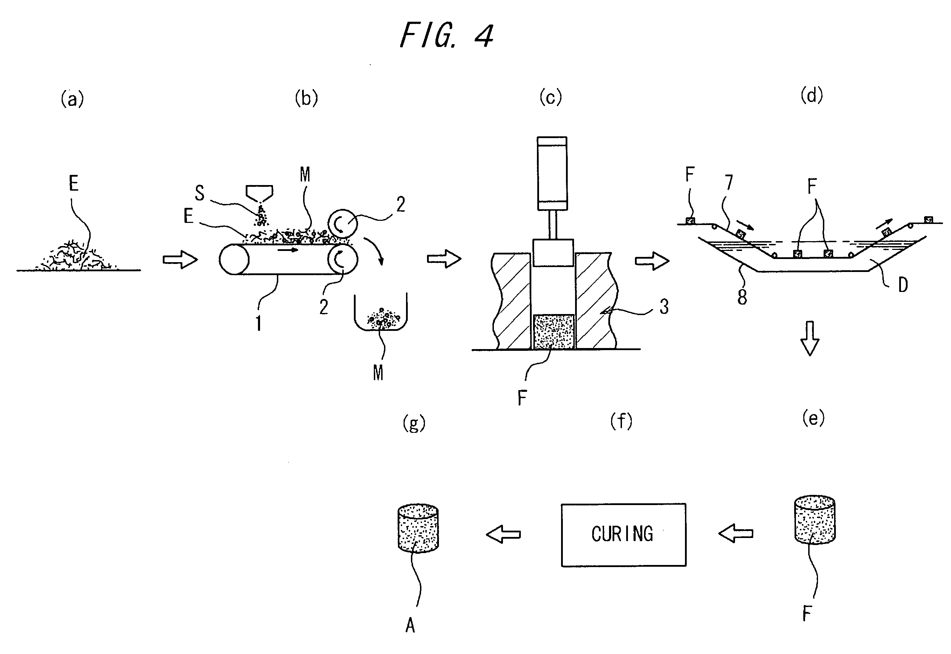

FIG.4 is a step chart illustrating a method of manufacturing a briquette for use as steelmaking material according to a third embodiment of the invention. In the manufacture of the briquette A, cotton-like agglomerations M are first prepared by sprinkling the shot waste S on cutting sludge E (FIG. 4(a)) being transported on the belt conveyor 1, the cutting sludge resulting from cutting a ferrous metal. The cotton-like agglomerations are admixed with the shot waste S (FIG.4(b)).
The cutting sludge E is a cotton-like material containing the cutting residue particles and the cutting fluid. The shot waste S results from shot blasting a ferrous metal, containing spent shot beads thinned down to less than a predetermined particle size by the shot blasting process and a powder material containing oxidized powder iron in an amount of 60 to 65wt%.
A mixing ratio of the shot waste S is 10 to 30wt%. If the cotton-like agglomerations M contains the shot waste S in an amount of less than 10wt%, the briquette A having a great bulk density is difficult to obtain. If the content of the shot waste S in the cotton-like agglomerations M exceeds 30wt%, the subsequent step may have difficulty in solidifying the agglomerations. Furthermore, in a case where the shot waste S is unevenly distributed, the briquette A is susceptible to fracture at a portion where the shot waste S is concentrated.

Next, the cotton-like agglomerations M are compressed under pressure for preliminary adjustment of the contents of water and oil in the cutting sludge E, the water and oil constituting the cutting fluid. The pressurization/compression of the cotton-like agglomerations M may be accomplished, for example, by clamping the agglomerations between a pair of rollers 2 disposed in the vicinity of a transportation end of the belt conveyor 1 (FIG.4(b)). It is preferred in this process that the adjustment of the cotton-like agglomerations M is made so as to limit the water content up to 50wt% and to limit the oil content up to 10wt%. Thus, the cotton-like agglomerations M are made easy to handle during the transportation, storage and the like.

The cotton-like agglomerations M having the contents of water and oil so adjusted are compression molded by means of the press using the mold 3 so as to form a brittle compact F (FIG.4(c)). The compression molding roughly shears the cutting residue particles having a spiral-fiber shape and contained in the cutting sludge E. The compression molding also removes excessive water and oil from the brittle compact F, so that the water content thereof is adjusted to 2 to 12wt% whereas the oil content thereof is adjusted to 1 to 5wt%.
This permits the minimum amount of residual oil to effectively prevent the oxidization of the cutting residue particles. Since the previous step preliminarily adjusts the cutting sludge E to limit the water content up to 50wt% and the oil content up to 10wt%, the content percentages of water and oil in the brittle compact F can be easily and properly adjusted only by compression molding.
The brittle compact F is formed in a shape easy to handle, such as circular cylinder, sphere and prism, and is compacted to such a strength as not to collapse when sent to the subsequent step.

Subsequently, the brittle compact F is impregnated with the solidification assistant D in liquid form. The impregnation of the solidification assistant D is accomplished, for example, by dipping the brittle compact F in the solidification assistant D filled in the tank 8 as carrying the brittle compact F on the belt conveyor 7 (FIG.4(d)). The solidification assistant D may preferably be at least one selected from the group consisting of sodium silicate, colloidal silica and aluminum phosphate. This embodiment principally uses sodium silicate. The solidification assistant D may preferably be impregnated in an amount of 2 to 30wt%. Thus, the brittle compact F can be easily and rigidly solidified. An organic binder such as vinyl acetate may also be used as the solidification assistant D.

Next, the brittle compact F impregnated with the solidification assistant D (FIG.4(e)) is cured (dried) for removal of the water contained therein (FIG.4(f)). Thus is obtained the briquette A for use as steelmaking material (FIG.4(g)). The curing may preferably be performed for two days or so because the briquette is assuredly removed of the water contained therein. For curing, the briquette may also be quickly cooled by applying thereto air blow at normal temperatures or cooled air blow.
The above manufacture process provides the dry briquette A containing the shot waste S, ferrous-metal cutting residue particles E, iron and oil. The resultant briquette A contains the shot waste S in an amount of 5 to 25wt%.

The briquette A is a porous mass formed by solidifying the brittle compact F and hence, is readily and assuredly removed of water by curing. Therefore, when the briquette is directly charged into the blast furnace, there is no fear of causing bumping or of being scatteringly carried upward to be discharged from the furnace.
Since the briquette A contains the shot waste S in the amount of 5 to 25wt%, the briquette has adequate bulk density and mechanical strength. The briquette A for use as steelmaking material is required to fall smoothly into the blast furnace without being scatteringly carried upward when charged into the furnace. Hence, some type of blast furnace may require the briquette to have a bulk density of 0.2 or more.
If the briquette contains the shot waste in an amount of less than 5wt%, the briquette may fail to satisfy this requirement. If the content of the shot waste in the briquette exceeds 25wt%, the briquette may have the following problem. That is, in the case of the uneven distribution of the shot waste, the briquette may be susceptible to fracture at its portion where the shot waste is concentrated.

Furthermore, the above process of manufacturing the briquette A effectively prevents the oxidization of the pure iron because the process materials retain some of the oil of the cutting fluid at all times. It is confirmed, for example, that a briquette A manufactured using a cutting sludge E containing cutting residue from a bearing steel (SUJ-2) contains 60 to 90wt% of pure iron. Therefore, the briquette has a high smelting yield of 80% or more such as to be worthy of a high-quality steelmaking material which can be offered to steel makers for pay. What is more, the briquette is in the solid form, thereby facilitating the transportation and other handling operation thereof.
In addition, the above manufacture process can solidify the cotton-like agglomerations M without involving a step of crushing the cotton-like agglomerations M into fine particles. This leads to an efficient manufacture of the briquette A.

The above method of manufacturing the briquette A may be particularly preferably applied to the reuse of the cutting residue particles having a carbon content of 0.2wt% or more. While such cutting residue particles have such a great springback as to be hard to solidify, the manufacture method of the invention may be applied thereby easily forming the rigidly solidified briquette A as eliminating the influence of the springback. The cutting residue particles having a carbon content of 0.2wt% or more is typically exemplified by cutting residue from a bearing steel.

The foregoing embodiments use the shot waste S which includes the spent shot beads and the powder material containing oxidized powder iron. Alternatively, a mass consisting of only the shot beads left by screening out the powder material may also be used as the shot waste. In this case, the briquette A is decreased in the content of oxidized iron, so that the use of the reducing agent in the steelmaking process can be reduced accordingly. Thus, the briquette can be even more preferably used as the steelmaking material.

In the above third embodiment, as well, the briquette A may have not only the aforementioned circular cylindrical shape, but also the pillow-like shape, such as of eggs, almond and rugby ball. The pillow-like shape has a rounded circumferential edge and is gradually increased in thickness from the circumferential edge toward its center (FIG.3).

The above briquette A may also be manufactured by admixing fine dusts (recovery dusts) with the shot waste S, followed by solidifying the resultant mixture with the solidification assistant D. The fine dusts are a byproduct of the steelmaking process by means of an electric furnace or open-hearth furnace, or of a smelting operation of a metal such as copper, zinc, oxidized tin and brass.

## Claims

1. A briquette for use as steelmaking material comprising a dry briquette which contains a ferrous metal and which is formed by solidifying shot waste with a solidification assistant, the shot waste containing a ferrous powder metal and a great number of shot beads.

2. The briquette for use as steelmaking material according to Claim 1, wherein the shot beads are bonded to one another via the ferrous powder metal impregnated with the solidification assistant.

3. The briquette for use as steelmaking material according to Claim 1, containing the solidification assistant in an amount of 0.5 to 5wt%.

4. The briquette for use as steelmaking material according to Claim 1, further containing ferrous-metal cutting residue particles and oil.

5. The briquette for use as steelmaking material according to Claim 4, containing the shot waste in an amount of 5 to 25wt%.

6. The briquette for use as steelmaking material according to Claim 4, wherein the shot waste comprises shot beads formed from steel.

7. The briquette for use as steelmaking material according to Claim 1 or 4, wherein the solidification assistant is at least one selected from the group consisting of sodium silicate, colloidal silica, aluminum phosphate and asphalt emulsion.

8. A method of manufacturing a briquette for use as steelmaking material comprising the steps of:
- adding a solidification assistant to shot waste containing a ferrous powder metal and shot beads;
- compression molding the shot waste admixed with the solidification assistant; and
- drying the compression molded shot waste.

9. The method of manufacturing a briquette for use as steelmaking material according to Claim 8, further comprising a step of impregnating the solidification assistant into the shot waste, the step being interposed between the step of compression molding the shot waste and the step of drying the compression molded shot waste.

10. A method of manufacturing a briquette for use as steelmaking material comprising the steps of:
- forming cotton-like agglomerations by admixing shot waste to cutting sludge containing ferrous-metal cutting residue particles and a cutting fluid containing oil and water;
- compression molding the cotton-like agglomerations thereby forming a brittle compact of a predetermined shape, which has the fibrous cutting residue particles sheared and which is removed of excessive water and oil;
- impregnating a solidification assistant into the brittle compact; and
- drying the brittle compact impregnated with the solidification assistant.

11. The method of manufacturing a briquette for use as steelmaking material according to Claim 10, wherein the shot waste is admixed in an amount of 10 to 30wt%.

12. The method of manufacturing a briquette for use as steelmaking material according to Claim 10, wherein the shot waste comprises shot beads formed from steel.

13. The method of manufacturing a briquette for use as steelmaking material according to Claim 8 or 10, wherein at least one selected from the group consisting of sodium silicate, colloidal silica, aluminum phosphate and asphalt emulsion is used as the solidification assistant.
